# FASCICULE DE BREVET EUROPEEN

(11) **EP 1 280 685 B1**
(45) Date de publication et mention de la délivrance du brevet: **16.11.2005**
(21) Numéro de dépôt: 01931795.7
(22) Date de dépôt: 04.05.2001
(51) Int. Cl.: B60S 1/32

(54) **BRAS-BALAI D'ESSUIE-GLACE ET PROCEDE D'OBTENTION**
WISCHERARM UND HERSTELLVERFAHREN
WIPER BRUSH ARM AND METHOD FOR MAKING SAME

(30) Priorité: 11.05.2000 FR 0006014
(43) Date de publication de la demande: 05.02.2003
(73) Titulaire: VALEO SYSTEMES D'ESSUYAGE, 78321 La Verrière (FR)
(72) Inventeur: BENOIT, Géraldine, F-75014 Paris (FR); VENDROUX, Isabelle, F-63500 Saint Babel (FR)
(86) Numéro de dépôt international: PCT/FR2001/001364
(87) Numéro de publication internationale: WO 2001/085501

(56) Documents cités:
- WO-A-93/03942
- WO-A-98/01329
- DE-A- 19 747 857
- FR-A- 2 482 540
- FR-A- 2 515 121
- US-A- 5 903 953

## Description

L'invention concerne un bras d'essuie-glace.

L'invention concerne plus particulièrement un bras d'essuie-glace de véhicule automobile formant aussi balai qui est appelé bras-balai.

Les bras d'essuie-glace sont de forme générale allongée et permettent la transmission d'un mouvement de balayage alterné d'une tête d'entraînement, située par exemple à proximité de la base inférieure du pare-brise avant ou de la lunette arrière d'un véhicule, à un balai d'essuie-glace équipé d'une raclette d'essuyage.

Les bras d'essuie-glace doivent être suffisamment rigides pour pouvoir transmettre le mouvement de balayage alterné sans subir de déformations importantes.

Ils sont situés à l'extérieur du véhicule et sont visibles, notamment lors du mouvement de balayage alterné. Leur esthétique influe de façon importante sur l'aspect général extérieur du véhicule.

Un bras d'essuie-glace peut être constitué d'un profilé métallique, par exemple à section en U renversé, qui permet de transmettre les efforts de balayage. Cependant, les agressions extérieures telles que l'humidité et la pluie peuvent l'endommager, par exemple provoquer l'apparition d'oxydation, notamment de rouille. De façon à protéger le profilé métallique, il est connu de le recouvrir d'une couche de protection telle que de la peinture.

La fabrication d'un tel bras d'essuie-glace est coûteuse. En effet, elle comporte un nombre important d'étapes telles que le découpage d'un flanc métallique, son pliage et sa mise en peinture. De plus, un bras d'essuie-glace métallique est lourd

Une autre solution propose de réaliser un bras-balai d'essuie-glace comportant un corps monobloc rigide en matière plastique moulé. La rigidité mécanique requise nécessite d'utiliser un matériau renforcé.

Il est connu du document WO-A-93/03942 un bras-balai d'essuie-glace, notamment de véhicule automobile, comportant un corps monobloc rigide en matière plastique moulé et de forme générale allongée dont une extrémité est entraînée en balayage alterné, et dont l'autre extrémité porte un balai d'essuie-glace ou une lame d'essuyage. Le corps monobloc est recouvert au moins en partie, par une couche. Cependant, cette couche n'a pas de fonction de protection.

Les agressions extérieures, en particulier les rayons ultraviolets émis par le soleil, provoquent une modification de la coloration de certains de ces matériaux. Par exemple, lorsqu'un bras d'essuie-glace est réalisé en matériau thermoplastique renforcé en fibres de verre, les rayons ultraviolets provoquent un blanchiment de la pièce. Un tel phénomène est rédhibitoire.

Dans le but de remédier à ces inconvénients, l'invention propose un bras-balai d'essuie-gace, notamment de véhicule automobile, selon la revendication 1.

Selon des modes de réalisation de l'invention :
- le corps comporte des moyens de renfort ;
- les moyens de renfort consistent en des fibres, notamment de fibres de verre ;
- les moyens d'accrochage consistent au moins partiellement en un accrochage chimique et/ou physico-chimique entre les surfaces en contact mutuel ;
- les moyens d'accrochage consistent au moins partiellement en une première zone d'accrochage de l'un des deux éléments dont la forme coopère avec une seconde zone d'accrochage complémentaire de l'autre élément ;
- la couche de protection enveloppe au moins partiellement le corps ;
- le corps est réalisé en matériau renforcé ;
- le matériau renforcé est du Polybutadiène;
- la couche de protection est réalisée en un matériau résistant au vieillissement climatique ;
- le matériau résistant au glissement climatique et de l'Acrylonitrile Styrène Acrilate ;

L'invention propose aussi un procédé d'obtention d'un bras-balai d'essuie-glace du type décrit précédemment caractérisé en ce que le corps et la couche de protection sont réalisés simultanément par moulage, notamment par injection, dans une empreinte unique de moule de façon que la couche de protection enveloppe au moins partiellement le corps.

Selon des modes de réalisation du procédé, l'invention propose :
- que le corps et la couche de protection soient réalisés en une seule opération selon la technique du comoulage ou de moulage bi-matières ;
- que le corps soit réalisé au moins partiellement avec soufflage de gaz lors de l'injection de façon à former un corps creux ;
- qu'on réalise le bras-balai en deux étapes, notamment par moulage du corps lors d'une première étape, et par surmoulage de la couche de protection autour du corps lors d'une étape suivante.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective d'un essuie-glace comportant un bras-balai en matière plastique constitué d'un corps recouvert d'une couche de protection réalisé conformément à un premier mode de réalisation de l'invention ;
- la figure 2 est une vue en section transversale du bras-balai d'essuie-glace selon le plan 2-2 de la figure 1 ;
- la figure 3 est une vue similaire à celle représentée à la figure 2, le corps et la couche de protection comportant des moyens d'accrochage complémentaires ;
- la figure 4 est une vue de détail et à plus grande échelle d'une partie de la figure 3 ;
- les figures 5a et 5b sont des vues similaires à celle représentée à la figure 4, les moyens d'accrochage étant réalisés selon une variante de l'invention ;
- les figures de 6 à 9 représentent, en section transversale, un moule d'injection de deux bras-balai d'essuie-glace au cours de différentes phases de fabrication de l'un des bras-balai ;
- la figure 10 est une vue similaire à celle représentée à la figure 2, le bras-balai d'essuie-glace étant réalisé selon un deuxième mode de réalisation de l'invention.

Une matière plastique peut difficilement satisfaire aux deux conditions principales requises pour un bras-balai d'essuie-glace, c'est à dire une rigidité suffisante pour limiter la déformation du bras-balai lors du mouvement de balayage alterné et une stabilité aux agressions extérieures telles que par exemple l'humidité et les rayons ultraviolets.

Pour ce faire, l'invention propose de réaliser un essuie-glace 10, notamment d'un véhicule automobile, comportant un bras-balai 12 qui est constitué d'un corps 14 monobloc rigide moulé en matière plastique et qui est recouvert par une couche de protection 16 contre les agressions extérieures qui est aussi en polymère.

Le corps 14 permet de transmettre les efforts de balayage alterné d'une première extrémité libre 18 qui est par exemple reliée à un palier (non représenté) d'entraînement en rotation alternée à une seconde extrémité libre 20, à proximité de laquelle est fixé un balai 22 d'essuie-glace qui supporte une raclette 24 en matériau polymère qui permet l'essuyage de la vitre lors du balayage.

Le corps 14 peut être réalisé en Polybutadiène Terephtalate (PBT) qui comporte des moyens de renfort.

Les moyens de renfort peuvent être des fibres, telles que des fibres de verre qui présentent des avantages, notamment d'améliorer la résistance mécanique du PBT et d'être bon marché. Cependant, les moyens de renfort modifient l'aspect du corps 14, par exemple par blanchiment, sous l'effet d'un vieillissement climatique.

La couche de protection 16 qui recouvre au moins partiellement le corps 14 et qui évite sa modification aspect, peut être par exemple réalisée en Acrylonitrile Styrène Acrilate (ASA) ou à base d'un alliage Polybutadiène Terephtalate. C'est un matériau stable vis-à-vis des agressions extérieures, notamment du rayonnement ultraviolet.

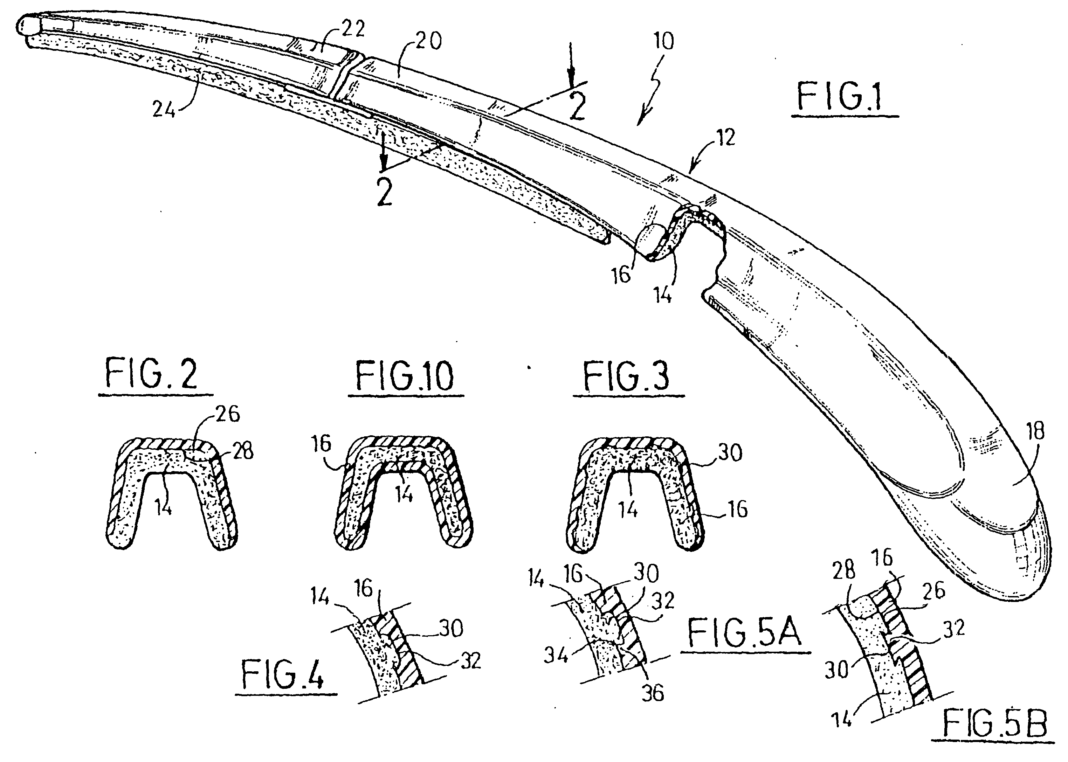

Selon un premier mode de réalisation conformément aux figures 1 à 5b, la couche de protection 16 recouvre uniquement les parois ou faces extérieures du corps monobloc 14 du bras-balai d'essuie-glace 12.

Il est alors nécessaire que la paroi extérieure 26 du corps 14 et la paroi interne 28 de la couche de protection 16 qui sont en contact mutuel comportent des moyens pour l'accrochage mécanique de la couche de protection 16 sur le corps 14.

Les moyens d'accrochage peuvent comporter une couche de colle qui permet l'adhésion de la paroi extérieure 26 du corps 14 sur la paroi interne 28 de la couche de protection 16.

Les moyens d'accrochage peuvent aussi consister au moins partiellement en un accrochage chimique et/ou physico-chimique entre les parois 26 et 28 du corps 14 et de la couche de protection 16 qui sont en contact mutuel.

C'est-à-dire que les matières plastiques constitutives du corps 14 et de l'enveloppe de protection 16 présentent une bonne compatibilité chimique, de façon que lors de la fabrication du bras-balai 12, des liaisons chimiques s'établissent entre les matières du corps 14 et de l'enveloppe de protection 16 de façon à réaliser leur fixation.

Ainsi, le couple Polybutadiène Terephtalate-Acrylonitrile Styrène Acrilate, pour le corps 14 et l'enveloppe de protection 16 respectivement, présente une bonne compatibilité chimique.

De plus, conformément aux figures 3 et 4, les moyens d'accrochage consistent au moins partiellement en une première zone d'accrochage 30 du corps 14 qui s'étend vers l'extérieur de sa paroi extérieure 26, pour coopérer avec une seconde zone d'accrochage 32 de forme complémentaire réalisée dans la paroi interne 28 de la couche de protection 16. Ainsi, la surface de contact entre les parois extérieure 26 et interne 28 est augmentée, ce qui favorise l'accrochage du corps 14 et de la couche de protection 16. De plus, la pénétration de la première zone d'accrochage 30 du corps 14 dans la seconde zone d'accrochage 32 de la couche 16 améliore l'accrochage des deux éléments 14 et 16 l'un avec l'autre.

Selon des variantes conformément aux figures 5a et 5b, la première zone d'accrochage 30 présente des contre-dépouilles 34 en forme de creux dans lesquelles coopèrent des formes complémentaires 36 en saillie de la couche de protection 16. L'accrochage mécanique ainsi réalisé permet à la couche de protection 16 d'être solidaire du corps 14.

De façon similaire, la figure 5b représente en section transversale le bras-balai 12.

La seconde zone d'accrochage 32 s'étend vers l'extérieur de la paroi interne 28 de la couche de protection 16 pour coopérer avec la première zone d'accrochage 30, de forme complémentaire, réalisée dans la paroi externe 26 du corps 14.

Le bras-balai d'essuie-glace 12 selon le premier mode de réalisation peut être obtenu par moulage, en deux étapes dans un même moule ou dans deux moules séparés.

Cette technique de moulage est aussi appelée surmoulage de matière plastique.

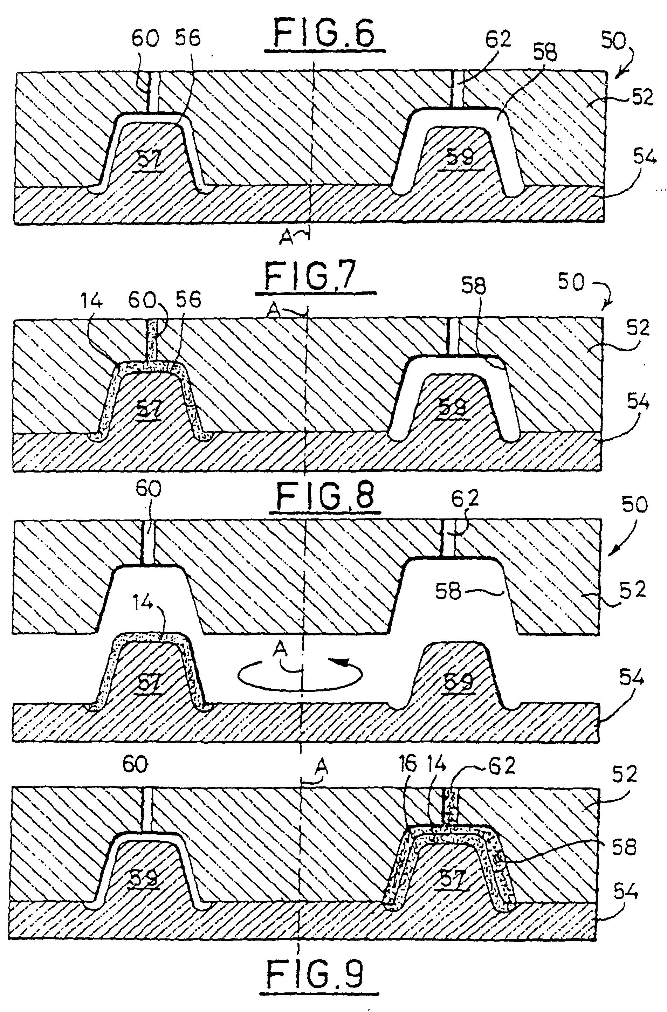

Un moule 50 représenté sur les figures 6 et 9 comporte une partie supérieure 52 et une partie inférieure 54 dans lesquelles sont réalisées deux empreintes en creux 56 et 58 qui sont reliées à l'extérieur par des canaux d'injection 60 et 62 respectivement.

La forme de l'empreinte 56 correspond à celle du corps 14, et celle de l'empreinte 58 correspond au bras-balai d'essuie-glace 12 composés du corps et de la couche de protection 16.

La partie inférieure 54 comporte une première et une seconde nervures identiques 57 et 59 qui définissent initialement les parois inférieures des empreintes 56 et 58 respectivement.

Lors de la première étape, un dispositif non représenté permet de chauffer de la matière plastique, notamment des granulés de Polybutadiène Terephtalate, renforcée en fibres de verre, à une température dite de transformation, de façon à la "liquéfier".

La matière est alors contrainte à remplir la première empreinte 56 du moule 50, par un procédé qui peut être une méthode d'injection.

Le chauffage et l'injection de la matière plastique sont réalisés par exemple par un dispositif particulier appelé vis de plastification.

La matière fondue est introduite dans le moule 50 par le premier canal d'injection 60 de façon qu'elle remplisse la première empreinte 56, conformément à la figure 7. Un dispositif de refroidissement, non représenté, qui est réalisé dans les parties supérieure 52 et inférieure 54 du moule 50 et qui permet d'accélérer la solidification de la matière injectée. Le corps 14 est alors terminé.

Le moule 50 est ouvert, c'est-à-dire que la partie inférieure 54 est translatée vers le bas selon l'axe vertical A. Le corps 14 reste solidaire de la partie inférieure 54. De plus, conformément à la figure 8, la carotte située dans le premier canal d'injection 60 est enlevée.

Une rotation de 180 degrés autour de l'axe vertical A est alors réalisée de façon que le corps 14 et la nervure 57 soient alignés verticalement avec la seconde empreinte 58. Puis, le moule 50 est fermé à nouveau.

Au cours d'une seconde étape, la "peau" de protection 16 est surmoulée sur le corps 14.

De la matière plastique telle que de l'Acrylonitrile Styrène Acrilate est portée à sa température de transformation, lorsque le moule 50 est fermé, elle est injectée dans le second canal d'injection 62 pour remplir la seconde empreinte 58, conformément à la figure 9, de façon similaire à la première étape. Après refroidissement, la seconde empreinte 58 contient alors un bras-balai 12 d'essuie-glace 10 réalisé selon l'invention.

Le moule 50 est ouvert, le bras-balai 12 d'essuie-glace 10 est séparé de la nervure 57. Un autre bras-balai 12 peut alors être fabriqué.

Avantageusement, la première empreinte 56 est remplie concomitamment au remplissage de la seconde empreinte 58. Ainsi, un bras-balai 12 d'essuie-glace 10 est réalisé a chaque ouverture du moule 50.

La technique de surmoulage permet notamment d'obtenir une grande précision quant à l'épaisseur de la couche de protection 16 et de l'épaisseur du corps 14 sur toute la longueur du bras 10.

La description de ce premier mode de réalisation n'est pas limitative. En effet, selon des variantes, le corps 14 peut être surmoulé sur la couche de protection 16, et/ou la partie supérieure 52 du moule 50 peut être mobile, et/ou l'injection de plastique peut être réalisée par des canaux d'injection situés dans la partie inférieure 54 du moule 50, etc...

Le premier mode de réalisation peut être obtenu sans rotation d'une partie du moule 50 mais par un transfert de la première partie injectée dans la deuxième empreinte.

Selon un second mode de réalisation, la couche de protection 16 enveloppe entièrement le corps 14, conformément à la section transversale du bras-balai 14 représenté à la figure 10.

Le corps 14 et la couche de protection 16 peuvent être réalisés simultanément par moulage, notamment par injection de matières plastiques, dans une empreinte unique d'un moule, non représenté.

Le bras-balai 12 est alors réalisé en une seule opération, selon la technique du comoulage, du moulage bi-matières ou de l'injection de type "sandwich".

Les deux matières du corps 14 et de la couche de protection 16 sont injectés concomitamment lors du même "shot" ou coup d'injection. Le dosage des deux matières se fait alors dans une vis commune de plastification.

Avantageusement, lors du moulage du bras-balai 12, du gaz peut être soufflé dans le moule concomitamment à l'injection 12 d'au moins une des deux matières du corps 14 et/ou de la couche de protection 16 de façon à former un bras-balai 12 creux.

## Revendications

1. Bras-balai (12) d'essuie-glace (10), notamment de véhicule automobile, du type qui comporte un corps (14) monobloc rigide en matière plastique moulé et de forme générale allongée dont une extrémité (18) est entraînée en balayage alterné, et dont l'autre extrémité (20) porte un balai d'essuie-glace (22) ou une lame d'essuyage (24), le corps monobloc (14) étant recouvert au moins en partie, par une couche (16) **caractérisé en ce que** la couche (16) est une couche de protection (16) du corps (14) contre des agressions extérieures, telles que les rayons ultraviolets, et **en ce que** la couche de protection (16) est en polymère, et **en ce que** les surfaces du corps (14) et de la couche de protection (16) en contact mutuel comportent des moyens (30, 32, 34, 36) pour l'accrochage mécanique de la couche de protection (16) sur le corps (14).

2. Bras-balai (12) d'essuie-glace (10) selon la revendication précédente, **caractérisé en ce que** le corps (14) comporte des moyens de renfort.

3. Bras-balai (12) d'essuie-glace (10) selon la revendication précédente, **caractérisé en ce que** les moyens de renfort consistent en des fibres, notamment de fibres de verre.

4. Bras-balai (12) d'essuie-glace (10) selon l'une quelconque des revendications précédentes, **caractérisé en ce que** les moyens d'accrochage consistent au moins partiellement en un accrochage chimique et/ou physico-chimique entre les surfaces en contact mutuel.

5. Bras-balai (12) d'essuie-glace (10) selon l'une quelconque des revendications précédentes, **caractérisé en ce que** les moyens d'accrochage consistent au moins partiellement en une première zone d'accrochage (30) de l'un des deux éléments dont la forme coopère avec une seconde zone d'accrochage (32) complémentaire de l'autre élément.

6. Bras-balai (12) d'essuie-glace (10) selon l'une quelconque des revendications précédentes, **caractérisé en ce que** la couche de protection (16) enveloppe au moins partiellement le corps (14).

7. Bras-balai (12) d'essuie-glace (10) selon l'une quelconque des revendications précédentes, **caractérisé en ce** le corps (14) est réalisé en matériau renforcé.

8. Bras-balai (12) d'essuie-glace (10) selon la revendication précédente, **caractérisé en ce que** le matériau renforcé est du Polybutadiène Terephtalate.

9. Bras-balai (12) d'essuie-glace (10) selon l'une quelconque des revendications précédentes, **caractérisé en ce que** la couche de protection (16) est réalisée en un matériau résistant au vieillissement climatique.

10. Bras-balai (12) d'essuie-glace (10) selon la revendication précédente, **caractérisé en ce que** le matériau résistant au glissement climatique et de l'Acrylonitrile Styrène Acrilate.

11. Procédé d'obtention d'un bras-balai (12) d'essuie-glace (10) selon l'une quelconque des revendications précédentes, **caractérisé en ce que** le corps (14) et la couche de protection (16) sont réalisés simultanément par moulage, notamment par injection, dans une empreinte unique de moule de façon que la couche de protection (16) enveloppe au moins partiellement le corps (14).

12. Procédé selon la revendication précédente, **caractérisé en ce que** le corps (14) et la couche de protection (16) sont réalisés en une seule opération selon la technique du comoulage ou de moulage bi-matières.

13. Procédé selon l'une des revendications 11 ou 12, **caractérisé en ce que** le corps (14) est réalisé au moins partiellement avec soufflage de gaz lors de l'injection de façon à former un corps (14) creux.

14. Procédé d'obtention d'un bras-balai (12) d'essuie-glace (10) selon l'une quelconque des revendications 1 à 10, **caractérisé en ce que** l'on réalise le bras-balai (12) en deux étapes, notamment par moulage du corps (14) lors d'une première étape, et par surmoulage de la couche de protection (16) autour du corps (14) lors d'une étape suivante.

## Patentansprüche

1. Arm-Wischblattkombination (12) eines Scheibenwischers (10), insbesondere eines Kraftfahrzeugs, von dem Typ, der einen steifen Körper (14) aus einem Block aus abgeformtem Plastik und in allgemein verlängerter Form umfasst, dessen eines Ende (18) beim alternierenden Wischen angetrieben wird und dessen anderes Ende (20) einen Scheibenwischer-Wischarm (22) oder ein Wischblatt (24) trägt, wobei der Körper (14) aus einem Block wenigstens zum Teil durch eine Schicht (16) abgedeckt ist, **dadurch gekennzeichnet, dass** die Schicht (16) eine Schutzschicht (16) des Körpers (14) gegen äußere Beeinträchtigungen ist, wie zum Beispiel ultraviolette Strahlen, und dass die Schutzschicht (16) aus Polymer ist und dass die Oberflächen des Körpers (14) und die Schutzschicht (16), die miteinander in Kontakt stehen, Mittel (30, 32, 34, 36) zur mechanischen Befestigung der Schutzschicht (16) auf dem Körper (14) umfassen.

2. Arm-Wischblattkombination (12) eines Scheibenwischers (10) gemäß dem vorherigen Anspruch, **dadurch gekennzeichnet, dass** der Körper (14) Verstärkungsmittel umfasst.

3. Arm-Wischblattkombination (12) eines Scheibenwischers (10) gemäß dem vorherigen Anspruch, **dadurch gekennzeichnet, dass** die Verstärkungsmittel aus Fasern bestehen, insbesondere aus Glasfasern.

4. Arm-Wischblattkombination (12) eines Scheibenwischers (10) gemäß einem der vorherigen Ansprüche, **da** **durch gekennzeichnet, dass** die Befestigungsmittel wenigstens teilweise aus einer chemischen und / oder physikalisch-chemischen Befestigung zwischen den miteinander in Kontakt stehenden Oberflächen bestehen.

5. Arm-Wischblattkombination (12) eines Scheibenwischers (10) gemäß einem der vorherigen Ansprüche, **dadurch gekennzeichnet, dass** die Befestigungsmittel wenigstens teilweise aus einem ersten Befestigungsbereich (30) eines der beiden Elemente bestehen, dessen Form mit einem zweiten, mit dem anderen Element komplementären Befestigungsbereich (32) zusammenwirkt.

6. Arm-Wischblattkombination (12) eines Scheibenwischers (10) gemäß einem der vorherigen Ansprüche, **dadurch gekennzeichnet, dass** die Schutzschicht (16) den Körper (14) wenigstens teilweise umgibt.

7. Arm-Wischblattkombination (12) eines Scheibenwischers (10) gemäß einem der vorherigen Ansprüche, **dadurch gekennzeichnet, dass** der Körper (14) aus verstärktem Material realisiert wird.

8. Arm-Wischblattkombination (12) eine Scheibenwischers (10) gemäß dem vorherigen Anspruch, **dadurch gekennzeichnet, dass** das verstärkte Material aus Polybutadientherephtalat ist.

9. Arm-Wischblattkombination (12) eines Scheibenwischers (10) gemäß einem der vorherigen Ansprüche, **dadurch gekennzeichnet, dass** die Schutzschicht (16) aus einem der klimabedingten Alterung standhaltenden Material (16) realisiert ist.

10. AK (12) eines Scheibenwischers (10) gemäß dem vorherigen Anspruch, **dadurch gekennzeichnet, dass** das dem klimatischen Abgleiten standhaltende Material aus Acrylnitril-Styrol-Acrylat ist.

11. Herstellungsverfahren einer Arm-Wischblattkombination (12) eines Scheibenwischers (10) gemäß einem der vorherigen Ansprüche, **dadurch gekennzeichnet, dass** der Körper (14) und die Schutzschicht (16) gleichzeitig durch Abformen, insbesondere durch Einspritzen, in einen einzigartigen Formabdruck realisiert werden, so dass die Schutzschicht (16) den Körper (14) wenigstens teilweise umgibt.

12. Verfahren gemäß dem vorherigen Anspruch, **dadurch gekennzeichnet, dass** der Körper (14) und die Schutzschicht (16) in einer einzigen Operation gemäß der Technik des gleichzeitigen Abformens oder des Abformens von zwei Materialien realisiert werden.

13. Verfahren gemäß Anspruch 11 oder 12, **dadurch gekennzeichnet, dass** der Körper (14) wenigstens teilweise durch Gasblasen beim Einspritzen realisiert wird, so dass ein hohler Körper (14) geformt wird.

14. Herstellungsverfahren einer Arm-Wischblattkombination (12) eines Scheibenwischers (10) gemäß Anspruch 1 bis 10, **dadurch gekennzeichnet, dass** man die Arm-Wischblattkombination (12) in zwei Stufen realisiert, insbesondere durch Abformen des Körpers (14) in einer ersten Stufe und durch Aufformen der Schutzschicht (16) um den Körper (14) in einer folgenden Stufe.

## Claims

1. A windscreen wiper (10) arm-blade (12), in particular for motor vehicles, of the type that comprises a rigid, single-piece body (14) made from a moulded plastic material and with an overall elongated shape, one end (18) of which is driven in an alternating sweeping movement, and the other end (20) of which supports a windscreen wiper arm (22) or a wiping blade (24), in which the single-piece body (14) is covered at least partially by a layer (16), **characterised in that** the layer (16) is a layer (16) for protecting the body (14) against external aggressions, such as ultraviolet rays, and **in that** the protective layer (16) is made from a polymer, and **in that** the surfaces of the body (14) and the protective layer (16), in mutual contact, comprise means (30, 32, 34, 36) for mechanically attaching the protective layer (16) to the body (14).

2. A windscreen wiper (10) arm-blade (12) according to the preceding claim, **characterised in that** the body (14) comprises reinforcement means.

3. A windscreen wiper (10) arm-blade (12) according to the preceding claim, **characterised in that** the reinforcement means consist of fibres, mainly fibreglass.

4. A windscreen wiper (10) arm-blade (12) according to any of the preceding claims, **characterised in that** the attachment means consist at least partially of chemical and/or physical-chemical attachment between the surfaces in mutual contact.

5. A windscreen wiper (10) arm-blade (12) according to any of the preceding claims, **characterised in that** the attachment means consist at least partially of a first attachment area (30) on one of the two elements, the shape of which works with a second, complementary attachment area (32) on the other element.

6. A windscreen wiper (10) arm-blade (12) according to any of the preceding claims, **characterised in that** the protective layer (16) covers the body (14) at least partially.

7. A windscreen wiper (10) arm-blade (12) according to any of the preceding claims, **characterised in that** the body (14) is made from a reinforced material.

8. A windscreen wiper (10) arm-blade (12) according to the preceding claim, **characterised in that** the reinforced material is polybutadiene terephthalate.

9. A windscreen wiper (10) arm-blade (12) according to any of the preceding claims, **characterised in that** the protective layer (16) is made from a material that is resistant to weathering.

10. A windscreen wiper (10) arm-blade (12) according to the preceding claim, **characterised in that** the material that is resistant to weathering is acrylonitrile styrene acrylate.

11. A method for obtaining a windscreen wiper (10) arm-blade (12) according to any of the preceding claims, **characterised in that** the body (14) and the protective layer (16) are produced simultaneously by moulding, mainly by injection, in a single mould cavity in order for the protective layer (16) to cover the body (14) at least partially.

12. A method according to the previous claim, **characterised in that** the body (14) and the protective layer (16) are produced in a single operation according to the technique known as co-moulding or sandwich moulding.

13. A method according to claims 11 or 12, **characterised in that** the body (14) is made at least partially by blowing gas during injection in order to create a hollow body (14).

14. A method for obtaining a windscreen wiper (10) arm-blade (12) according to any of the claims 1 to 10, **characterised in that** the arm-blade (12) is produced in two stages, mainly by moulding the body (14) during a first stage, and by sandwich moulding the protective layer (16) around the body (14) during a second stage.
